# FASCICULE DE BREVET EUROPEEN

(11) **EP 0 692 861 B1**
(45) Date de publication et mention de la délivrance du brevet: **03.03.1999**
(21) Numéro de dépôt: 95810456.4
(22) Date de dépôt: 11.07.1995
(51) Int. Cl.: H02K 15/02, H02K 15/00, H02K 1/28

(54) **Procédé de fabrication d'un paquet de tôles découpées pour la fabrication d'un rotor**
Verfahren zur Herstellung eines Blechpakets zur Herstellung eines Läufers
Manufacturing process of a stack of laminations for making a rotor

(30) Priorité: 15.07.1994 FR 9408797
(43) Date de publication de la demande: 17.01.1996
(73) Titulaire: R. BOURGEOIS (société anonyme), 25000 Besancon (FR)
(72) Inventeur: Bourgeois, Raymond, F-25000 Besancon (FR)
(74) Mandataire: Kiliaridis, Constantin

(56) Documents cités:
- EP-A- 0 100 871
- CH-A- 371 174
- DE-B- 1 042 736
- FR-A- 2 435 149
- US-A- 2 952 483
- US-A- 4 586 236
- PATENT ABSTRACTS OF JAPAN vol. 009 no. 147 (E-323) ,21 Juin 1985 & JP-A-60 028732 (TOSHIBA KK) 13 Février 1985,
- PATENT ABSTRACTS OF JAPAN vol. 008 no. 198 (E-265) ,11 Septembre 1984 & JP-A-59 086443 (TOSHIBA KK) 18 Mai 1984,
- PATENT ABSTRACTS OF JAPAN vol. 007 no. 186 (E-193) ,16 Août 1983 & JP-A-58 089041 (SANYO DENKI KK;OTHERS: 01) 27 Mai 1983,
- PATENT ABSTRACTS OF JAPAN vol. 016 no. 067 (E-1168) ,19 Février 1992 & JP-A-03 261341 (MITSUBISHI ELECTRIC CORP) 21 Novembre 1991,
- PATENT ABSTRACTS OF JAPAN vol. 006 no. 123 (E-117) ,8 Juillet 1982 & JP-A-57 052335 (HITACHI LTD) 27 Mars 1982,

## Description

La présente invention concerne un procédé de fabrication d'un paquet de tôles découpées pour la fabrication d'un rotor pour machine électrique pourvues d'éléments d'assemblage par agrafage et d'une ouverture, correspondant à l'alésage du paquet dans lequel l'arbre du rotor prendra place et, dans le but de diminuer la longueur de la portée du paquet sur l'arbre, ledit paquet étant pourvu d'un deuxième alésage de dimensions supérieures aux dimensions radiales de l'arbre.

Pour la fabrication des rotors de machines électriques, on forme des paquets de tôles magnétiques ou autres en forme annulaire dont le diamètre ainsi que la longueur du paquet dépend de la machine électrique qu'on désire réaliser. Les tôles sont assemblées entre-elles par divers moyens entre autre par agrafage. Le paquet ainsi formé présente au moins un alésage central dont les dimensions correspondent aux dimensions radiales de l'arbre de la machine électrique sur laquelle le paquet sera fixé pour former le rotor. La liaison cinématique entre l'arbre de la machine électrique et le paquet de tôles est réalisée en prévoyant des stries ou des cannelures ou des crans de l'arbre sur toute une longueur correspondante à la longueur du paquet, l'alésage du paquet de tôles présentant la configuration conjuguée pour permettre cet assemblage.

Lors de la mise en place de l'arbre dans l'alésage du paquet, des efforts considérables doivent être déployés car les dimensions de l'alésage et de l'arbre sont très proches pour éviter tout jeu entre les deux pièces assemblées. Ces efforts demandent des équipements puissants et un flambage de l'arbre peut intervenir ce qui est néfaste pour le bon fonctionnement de la machine électrique. L'usinage pour la création des stries, crans ou cannelures doit être réalisé avec une très grande précision sur toute la longueur de la partie de l'arbre qui supportera le paquet de tôles ce qui augmente également le coût de fabrication. L'assemblage de tôles découpées ne se fait pas dans des conditions optimales et la géométrie du rotor en soufre.

Dans le document JP-A-60 028 732, on décrit un paquet de tôles formant rotor. Les tôles de la partie centrale ont un alésage de dimension supérieure au diamètre de l'arbre.

Dans le document US-A-4 586 236, on décrit la formation de paquets de tôles assemblés par agrafage. Les tôles sont agrafées l'une à l'autre au fur et à mesure de leur découpage dans une bande.

La présente invention a pour but de proposer un procédé de fabrication d'un paquet de tôles pour rotor permettant de diminuer, voire éliminer les inconvénients précités et assurer une quasi parfaite géométrie du paquet ce qui est un élément indispensable aussi bien pour des raisons mécaniques qu'électromagnétiques.

Le procédé selon l'invention est défini par la partie caractérisante de la revendication 1.

L'avantage de ce procédé est que lors du découpage extérieur, on procède simultanéement à l'assemblage dans l'outil de découpage obtenant une géométrie optimale et qui est d'une importance capitale aussi bien pour les qualités mécaniques qu'électromagnétiques du rotor.

Selon une variante, les tôles présentant des alésages différents, sont découpées sur deux bandes différentes et par deux outils différents.

La réalisation des paquets de tôles présentant deux alésages est réalisée en utilisant un outil de découpage muni de deux perceurs d'alésage, un par dimension. L'un ou l'autre de ces perceurs d'alésage est activé par une programmation adéquate en cours du cycle de découpage ne faisant pas l'objet de la présente invention.

L'invention sera décrite plus en détail à l'aide du dessin annexé qui représente une exécution préférée de l'invention.

La figure 1 est une vue schématique en coupe d'un paquet de tôles destiné à un rotor.

La figure 2 est une vue en plan d'une tôle.

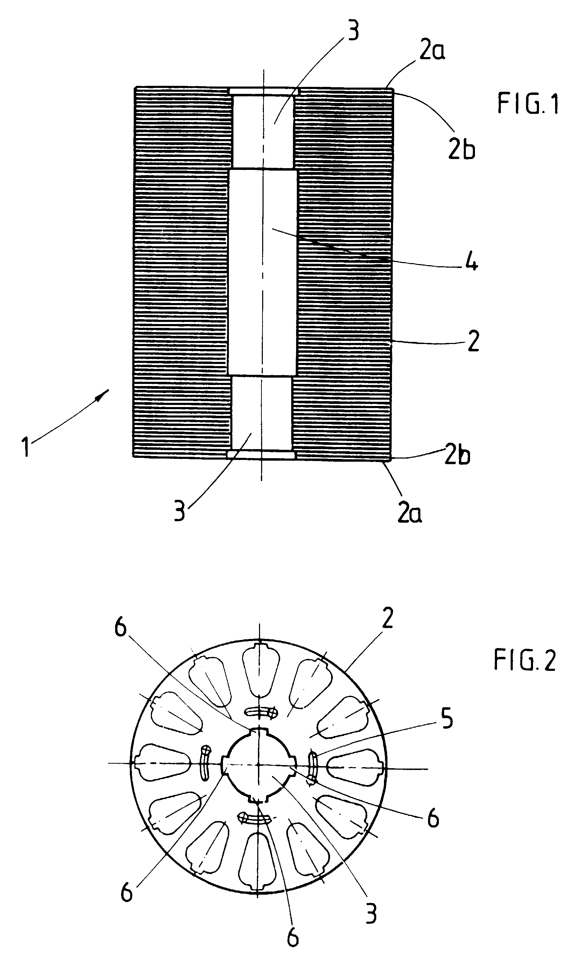

Le paquet 1 est formé de tôles découpées 2 comme celles représentées à la figure 2 assemblées par agrafage comme on le verra ultérieurement.

Le paquet représenté à la figure 1 présente tout le long de sa longueur un alésage présentant en fonction de la position des dimensions radiales différentes. Dans l'exemple choisi près des extrémités du paquet on a un alésage 3 dont les dimensions correspondent à l'alésage représentée sur la tôle de la figure 2 et, entre les deux parties d'extrémité un alésage 4 dont les dimensions sont supérieures aux dimensions de l'alésage 3.

Les deux premières tôles 2a et 2b aux extrémités présentent un alésage supérieur à l'alésage 3 et de préférence à l'alésage 4. La raison de ces deux alésages d'extrémité supérieures à l'alésage 3 est de faciliter le centrage lors de la mise en place de l'arbre dans le paquet. Il est évident que dans le cas présent les dimensions des alésages 3 correspondent aux dimensions radiales de l'arbre de la machine électrique. Le paquet de tôles est formé par des tôles découpées sur lesquelles on forme simultanément les éléments 5 permettant l'agrafage. Les éléments 5 sont réalisés par enfoncement, ainsi sur une face on a un bossage 5 qui correspond sur la face opposée de la tôle à une dépression. Lorsque deux tôles sont poussées l'une contre l'autre, le bossage de l'une entre dans la dépression de l'autre assurant ainsi l'assemblage par agrafage dans l'outil de découpage, notamment l'outil de découpage ou détourage extérieur.

L'alésage 3, représenté à la figure 2, est formé d'un alésage circulaire et quatre découpes 6 correspondant à un crantage de l'arbre sur lequel le paquet sera monté. Bien entendu ceci n'est qu'un exemple de réalisation, tout autre moyen d'assemblage de tôles entre-elles ou d'assemblage du paquet sur le rotor sont possibles.

Il est également possible de prévoir que la partie intermédiaire du paquet présente un alésage correspondant aux dimensions radiales de l'arbre et que les parties d'extrémité présentent les alésages qui sont supérieurs. On peut prévoir un paquet formé de parties successives, deux parties adjacentes présentant l'une un alésage correspondant aux dimensions radiales de l'arbre et l'autre un alésage de dimensions supérieures.

L'invention permet de limiter la portée du paquet de tôles sur l'arbre du rotor ainsi formé de la machine électrique afin de diminuer la puissance nécessaire lors de l'emmanchement de l'arbre dans le paquet et limiter ainsi le risque de flambage de l'arbre de limiter également le coût d'usinage de l'arbre, tout en assurant une géométrie aussi parfaite que possible.

L'outillage utilisé pour la réalisation de ces paquets est tout-à-fait conventionnel et lors de la formation d'un paquet on programme la machine de sorte que dans un cycle des tôles présentant un alésage de dimensions données soit réalisées pour former un paquet correspondant.

Selon le procédé de l'invention, une bande de tôle en avançant est, lors d'une première étape, découpée avec le diamètre d'alésage le plus petit. Lors d'une seconde étape, on crée les éléments d'agrafage et le cas échéant, pour certaines tôles, un diamètre d'alésage plus grand. Lorsque le paquet est formé par empilage et simultanément que le découpage extérieur on procède à l'assemblage du paquet en exerçant une pression dans l'outil de coupe ce qui assure une bonne géométrie.

Les tôles présentant des diamètres d'alésage différents peuvent venir de deux bandes séparées, les tôles de chaque bande étant découpées lors de la première étape avec un alésage ayant respectivement un diamètre différent.

## Revendications

1. Procédé pour la fabrication d'un paquet de tôles (2) découpées pour la fabrication d'un rotor pour machine électrique pourvues d'éléments d'assemblage (5) par agrafage et d'une ouverture (3) correspondant à l'alésage du paquet dans lequel l'arbre du rotor prendra place, ledit paquet étant pourvu d'un deuxième alésage (4) de dimensions supérieures aux dimensions radiales de l'arbre, caractérisé par le fait que l'on procède selon les étapes suivantes :
on fait avancer une bande de tôle sur une installation de découpage et on découpe des tôles présentant un alésage d'un premier diamètre;
on crée des éléments d'agrafage par enfoncement de tôles et le cas échéant on agrandit le diamètre d'alésage des tôles, on empile les tôles ainsi découpées et lors du découpage du diamètre extérieur d'un paquet, on effectue simultanément l'agrafage par pression, les éléments d'agrafage s'interpénétrant.

2. Procédé selon la revendication 1, caractérisé par le fait que les tôles de diamètre différents viennent de deux bandes distinctes, les outils de découpage ayant des diamètres différents.

## Patentansprüche

1. Verfahren zur Herstellung eines Blechpakets (2) zur Fertigung eines Läufers für eine elektrische Maschine, wobei die Bleche mit Verbindungselementen (5) und mit einer Öffnung (3) versehen sind, welche der Blechpaketbohrung entspricht, in die die Läuferwelle eingesetzt wird, und wobei das erwähnte Blechpaket mit einer zweiten Bohrung (4) versehen ist, deren Abmessungen grösser als die radialen Abmessungen der Welle sind, gekennzeichnet durch die folgenden Schritte:
- Es wird ein Blechband auf einer Stanzeinrichtung vorgeschoben, und die Bleche werden durch Stanzen mit einer einen ersten Durchmesser aufweisenden Bohrung versehen;
- die Verbindungselemente werden durch Eindrücken der Bleche unter Bildung von Vertiefungen erzeugt, und gegebenenfalls wird der Durchmesser der Bohrung der Bleche vergrössert; die so gestanzten Bleche werden aufeinandergeschichtet, und beim Stanzen des äusseren Durchmessers eines Pakets wird gleichzeitig die Verbindung durch Pressung hergestellt, indem die Verbindungselemente, Buckel und Vertiefungen, ineinander gedrückt werden.

2. Verfahren nach Anspruch 1, dadurch gekennzeichnet, dass die Bleche mit verschiedenem Durchmesser von zwei unterschiedlichen Bändern stammen, wobei die Stanzwerkzeuge verschiedene Durchmesser haben.

## Claims

1. Process for the manufacture of an electric machine rotor from a stack of cut sheet metal (2), the stack having an outside diameter, fastening elements (5) and an opening (3) corresponding to a bore of the stack in which a rotor shaft will be placed, said stack being provided with another bore (4) of larger dimension than the radial dimensions of the shaft, characterized by the fact that the process proceeds according to the following steps :
advancing a band of sheet metal onto a cutting installation and cutting the sheet metal, thereby presenting a first bore of a first diameter ;
creating the fastening elements by
punching the sheet metal and, when needed, enlarging the diameter in the sheet metal,
stacking the sheet metal cut in this way and
during the cutting of the outside diameter of the stack, simultaneously fastening by pressure, thus interpenetrating the fastening elements.

2. The process according to claim 1, characterized by the fact that the sheet metal of different diameters arrives from two distinct bands, cutting tools having different diameters being used.
